(19) Europäisches Patentamt
European Patent Office
Office européen des brevets

(11) **EP 1 349 648 B1**

(12) **FASCICULE DE BREVET EUROPEEN**

(45) Date de publication et mention
de la délivrance du brevet:
**23.03.2011 Bulletin 2011/12**

(51) Int Cl.:
***B01J 13/00*** *(2006.01)*

(21) Numéro de dépôt: **01999425.0**

(22) Date de dépôt: **07.12.2001**

(86) Numéro de dépôt international:
**PCT/FR2001/003874**

(87) Numéro de publication internationale:
**WO 2002/045840 (13.06.2002 Gazette 2002/24)**

(54) **DISPERSION COLLOIDALE AQUEUSE DE PHOSPHATE DE TERRE RARE ET PROCEDE DE PREPARATION**

DISPERSION KOLLOIDALE VON PHOSPHATEN VON SELTENEN ERDEN SOWIE IHRE HERSTELLUNGSVERFAHREN

AQUEOUS RARE EARTH PHOSPHATE COLLOIDAL DISPERSION AND PREPARATION METHOD

(84) Etats contractants désignés:
**AT BE CH CY DE DK ES FI FR GB GR IE IT LI LU MC NL PT SE TR**

(30) Priorité: **08.12.2000 FR 0016004**

(43) Date de publication de la demande:
**08.10.2003 Bulletin 2003/41**

(73) Titulaire: **Rhodia Electronics and Catalysis 17041 La Rochelle (FR)**

(72) Inventeur: **CHANE-CHING, Jean-Yves F-95600 Eaubonne (FR)**

(74) Mandataire: **Dubruc, Philippe Rhodia Services Direction de la Propriété Industrielle 40 Rue de la Haie-Coq 93306 Aubervilliers Cedex (FR)**

(56) Documents cités:
**EP-A- 0 308 311    WO-A-00/76918**
**US-A- 2 082 233    US-A- 3 615 807**

## Description

La présente invention concerne une dispersion colloïdale aqueuse de phosphate de terre rare et son procédé de préparation.

Les domaines de la luminescence et de l'électronique connaissent actuellement des développements importants. On peut citer comme exemple de ces développements, la mise au point des systèmes à plasma (écrans et lampes) pour les nouvelles techniques de visualisation et d'éclairage. Ces nouvelles applications nécessitent des matériaux luminophores présentant des propriétés de plus en plus améliorées. Ainsi, outre leur propriété de luminescence, on demande à ces matériaux des caractéristiques spécifiques de morphologie ou de granulométrie afin de faciliter notamment leur mise en oeuvre dans les applications recherchées.

Plus précisément, il est demandé d'avoir des luminophores se présentant sous la forme de particules le plus possible individualisées et de taille très fine.

Les sols ou dispersions colloïdales peuvent constituer une voie d'accès intéressante à un tel type de produits.

La présente invention a pour objet de fournir un sol utilisable notamment dans les domaines de la luminescence et de l'électronique et à partir duquel on peut obtenir des produits fins et bien désagglomérés.

Le document WO 00/76918 décrit bien des dispersions colloïdales de phosphate cérium ou de lanthane mais les particules de ces dispersions sont constituées d'agglomérats de cristaux.

Le document EP-A-308311 décrit des sols de composés de terre rare mais il s'agit d'hydroxydes et non pas de phosphates de terre rare.

La dispersion selon l'invention est une dispersion colloïdale aqueuse de particules de phosphate d'au moins une terre rare qui comprend soit un complexant présentant un pK (cologarithme de la constante de dissociation du complexe formé par le complexant et ladite terre rare) supérieur à 2,5; soit un anion d'un acide monovalent, soluble dans l'eau et présentant un pKa compris entre 2,5 et 5; soit encore ledit complexant ou ledit anion en mélange, et elle est caractérisée en ce que lesdites particules sont isotropes et présentent un rapport L/l d'au plus 4, L désignant la plus grande longueur de la particule et 1 désignant la plus petite et en ce qu'elles présentent un taux d'agglomération de colloïdes inférieur à 40%, plus particulièrement inférieur à 10%.

Les particules de la dispersion de l'invention peuvent présenter une taille de l'ordre de quelques nanomètres, une morphologie homogène et bien individualisée ce qui rend la dispersion particulièrement utile pour des applications mettant en oeuvre des luminophores.

D'autres caractéristiques, détails et avantages de l'invention apparaîtront encore plus complètement à la lecture de la description qui va suivre, ainsi que des divers exemples concrets mais non limitatifs destinés à l'illustrer.

Par terre rare on entend pour l'ensemble de la description les éléments du groupe constitué par l'yttrium et les éléments de la classification périodique de numéro atomique compris inclusivement entre 57 et 71.

L'invention s'applique à des dispersions ou des sols de particules de phosphate d'une ou plusieurs terres rares. On entend ici des particules à base essentiellement d'orthophosphates de formule $LnPO_4$, Ln désignant une ou plusieurs terres rares.

Par ailleurs, pour la suite de la description, l'expression dispersion colloïdale ou sol d'un phosphate de terre rare désigne tout système constitué de fines particules solides de dimensions colloïdales à base généralement d'un phosphate de terre rare au sens donné ci-dessus, qui peut être hydraté, et en suspension dans une phase liquide aqueuse. Ces particules peuvent en outre contenir un certaine quantité du complexant ou de l'anion de l'acide monovalent précités. Elles peuvent aussi, éventuellement, contenir des quantités résiduelles d'ions liés ou adsorbés qui peuvent provenir des sels de terre rare utilisés dans la préparation de la dispersion tels que par exemple des anions nitrates, acétates, chlorures, citrates, ammoniums ou des ions sodium ou encore des anions phosphates ($HPO_4^{2-}$, $PO_4^{3-}$, $P3O_{10}^{5-}$...). On notera que dans de telles dispersions, la terre rare peut se trouver soit totalement sous la forme de colloïdes, soit simultanément sous la forme d'ions, d'ions complexés et de colloïdes. De préférence, au moins 80% de la terre rare se trouve sous forme colloïdale.

La phase liquide aqueuse peut comprendre aussi le complexant ou l'acide monovalent ou l'anion de cet acide, les anions précités des sels de terre rare et des ions vanadates ou phospho-vanadates sous diverses formes.

Le terme complexant désigne dans la présente description un composé ou une molécule pouvant établir une liaison covalente ou iono-covalente avec le cation terre rare. Les complexants qui conviennent dans le cadre de la présente invention sont des complexants à constante de dissociation de complexes Ks élevées, le complexe considéré ici étant le complexe formé par le complexant et le cation terre rare. A titre d'exemple pour l'équilibre donné ci-dessous :

$$(Ln,l)^{(3-x)+} = Ln^{3+} + l^{x-}$$

dans lequel Ln désigne la terre rare, 1 le complexant et $1^-$ l'anion complexant, x étant égal à 1, 2 ou 3 en fonction de l'état d'ionisation du complexe;

la constante de dissociation de complexes Ks est donnée par la formule :

$$Ks = [Ln^{3+}] \times [l^{x-}] / [(Ln,l)^{(3-x)+}]$$

Le pK est le cologarithme de Ks. Plus le complexe $(Ln,I)^{(3-x)+}$ est stable, plus la valeur de pK est élevée.

Les complexants qui conviennent dans le cadre de la présente invention sont ceux présentant un pK supérieur à 2,5, de préférence d'au moins 3.

Le complexant peut être notamment choisi parmi les acides-alcools ou les polyacides-alcools ou leurs sels. Comme exemple d'acide-alcool, on peut citer l'acide glycolique ou l'acide lactique. Comme polyacide-alcool, on peut mentionner l'acide malique et l'acide citrique.

Le complexant peut aussi être choisi parmi les acides aliphatiques aminés, de préférence les polyacides aliphatiques aminés, ou leurs sels. Comme exemple d'un tel complexant, on peut donner l'acide éthylène-diamino-tétracétique ou l'acide nitrilo-tri-acétique ou encore le sel de sodium de l'acide glutamique N, N diacétique de formule $(NaCOO^-)CH_2CH_2-CH(COONa)N(CH_2COO^-Na)_2$.

Comme autres complexants convenables, on peut utiliser les acides polyacryliques et leurs sels comme le polyacrylate de sodium, et plus particulièrement ceux dont la masse moléculaire en poids est comprise entre 2000 et 5000.

Le complexant peut se trouver soit sous forme acide soit sous forme ionisé.

On notera enfin qu'un ou plusieurs complexants peuvent être présents dans la même dispersion.

Selon l'invention, la dispersion peut aussi comprendre l'anion d'un acide monovalent, soluble dans l'eau et présentant un pKa compris entre 2,5 et 5. Cet acide peut être notamment l'acide formique, l'acide propionique ou l'acide monochloracétique. Ce peut être tout particulièrement l'acide acétique. Là encore, plusieurs anions d'acides monovalents peuvent être présents dans la même dispersion.

Comme indiqué plus haut, le complexant et l'anion précité peuvent être présents en mélange dans la dispersion.

Le taux de complexant et/ou d'anion de l'acide monovalent, exprimé en nombre de moles de complexant ou d'anion d'acide monovalent par rapport au nombre d'atomes de terre rare, peut varier notamment entre 0,01 et 0,25, plus particulièrement entre 0,05 et 0,21. Ce taux est déterminé par dosage chimique du carbone et de la terre rare des colloïdes récupérés après ultracentrifugation à 50000t/mn pendant 6 heures. Un tel taux s'applique à la somme des complexants ou des anions si plusieurs complexants ou anions sont présents dans la dispersion.

Les dispersions de l'invention sont du type nanométrique. On entend par là des dispersions dont les colloïdes sont généralement d'une taille d'au plus 250nm environ, notamment d'au plus 100nm, de préférence d'au plus 20nm et encore plus particulièrement d'au plus 10nm. Les particules colloïdales peuvent notamment présenter une taille comprise entre environ 3nm et environ 10nm

Les tailles précitées sont déterminées par analyse par METHR (Microscopie Electronique par Transmission à Haute Résolution), complétée si nécessaire par cryo-microscopie.

Outre leur faible taille, les colloïdes des dispersions de l'invention sont peu ou pas agglomérés. Les analyses par cryo-microscopie électronique à transmission sur échantillons congelés (technique Dubochet) montrent un taux d'agglomération de colloïdes faible par exemple inférieur à 40%, plus particulièrement inférieur à 10% voire inférieur à 5% en nombre, c'est à dire que sur l'ensemble des objets ou particules que l'on observe, au moins 60%, plus particulièrement 90% et encore plus particulièrement au moins 95% sont constitués d'un seul cristallite.

En outre, les particules colloïdales sont isotropes ou substantiellement isotropes en ce qui concerne leur morphologie. Leur forme se rapproche en effet de celle d'une sphère (morphologie totalement isotrope) par opposition aux particules de forme aciculaire ou plaquettaire.

Plus précisément, les particules peuvent présenter un rapport L/I d'au plus 5, de préférence d'au plus 4 et encore plus particulièrement d'au plus 3, L désignant la plus grande longueur de la particule et I désignant la plus petite.

La présente invention s'applique tout particulièrement au cas où la terre rare est le lanthane, le cérium, le praséodyme, le gadolinium ou l'yttrium. Elle s'applique aussi en particulier aux dispersions colloïdales de phosphates ternaires de lanthane, de cérium et de terbium. Pour ces phosphates ternaires, on peut citer plus particulièrement ceux de formule $La_xCe_yTb_{1-x-y}PO_4$ dans laquelle x est compris inclusivement entre 0,4 et 0,7 et x+y est supérieur à 0,7. L'invention s'applique aussi notamment aux phosphates mixtes de lanthane et d'europium ou encore de lanthane et de thulium ou de lanthane, de thulium et de gadolinium. Pour les phosphates contenant du thulium, la teneur en thulium, exprimée en % atomique par rapport au lanthane, peut être comprise notamment entre 0,1 et 10, plus particulièrement entre 0,5 et 5 et pour ceux contenant du gadolinium, la teneur en ce dernier élément, exprimée en % atomique par rapport au lanthane, peut varier par exemple entre 10 et 40%.

Les concentrations des dispersions de l'invention sont généralement d'au moins 15g/l, notamment d'au moins 20g/l et plus particulièrement d'au moins 50g/l, concentrations exprimées en concentration équivalente en oxyde de terre rare. La concentration est déterminée après séchage et calcination sous air d'un volume donné de dispersion.

Le procédé de préparation des dispersions de l'invention va maintenant être décrit.

Ce procédé peut être mis en oeuvre selon différentes variantes.

Le procédé selon une première variante est caractérisé en ce qu'il comprend les étapes suivantes :

- on met en contact une dispersion colloïdale d'au moins un composé de terre rare comprenant au moins un complexant ou un anion de l'acide monovalent précité avec des ions phosphates;
- on chauffe le milieu ainsi obtenu ce par quoi on obtient un précipité;
- on sépare le précipité ainsi obtenu et on le redisperse dans l'eau, ce par quoi on obtient une dispersion colloïdale.

Le procédé selon une seconde variante est caractérisé en ce qu'il comprend les étapes suivantes :

- on met en contact une dispersion colloïdale d'au moins un composé de terre rare comprenant au moins un complexant ou un anion de l'acide monovalent précité avec des ions phosphates dont au moins une partie est sous forme de tripolyphosphate alcalin;
- on chauffe le milieu ainsi obtenu ce par quoi on obtient une dispersion colloïdales.

Le produit de départ du procédé quelle que soit la variante est une dispersion colloïdale d'au moins un composé de terre rare qui comprend en outre le complexant et/ou l'anion de l'acide monovalent précité.

Cette dispersion colloïdale de départ pourra avoir été obtenue par tout moyen connu. On pourra se référer notamment aux procédés décrits dans les demandes de brevet européens EP 206906, EP 208581, EP 316205 qui concernent des dispersions à base de cérium. On peut utiliser tout particulièrement les dispersions colloïdales obtenues par thermohydrolyse d'une solution aqueuse d'un sel de cérium IV comme un nitrate, en milieu acide notamment. Un tel procédé est décrit dans la demande de brevet européen EP 239477 ou EP 208580. On peut se référer aussi à la demande de brevet européen EP 308311 qui concerne des dispersions de terres rares trivalentes, en particulier yttriques. Si nécessaire, on ajoute aux dispersions telles qu'obtenues selon l'enseignement de ces demandes le complexant et/ou l'anion de l'acide monovalent précité. Dans les dispersions décrites ci-dessus ou généralement utilisées, la terre rare est présente sous forme d'oxyde et/ou d'oxyde hydraté (hydroxyde).

Cette dispersion colloïdale peut être préparée notamment en formant un mélange aqueux comprenant au moins un sel de terre rare et soit un complexant précité soit un acide monovalent, soluble dans l'eau et présentant un pKa compris entre 2,5 et 5, soit un mélange du complexant et de l'acide monovalent; et en ajoutant au mélange formé une base.

Les sels de terre rare peuvent être des sels d'acides inorganiques ou organiques, par exemple du type sulfate, nitrate, chlorure ou acétate. On notera que le nitrate et l'acétate conviennent particulièrement bien. Comme sels de cérium, on peut utiliser plus particulièrement l'acétate de cérium III, le chlorure de cérium III ou le nitrate de cérium III ou de cérium IV ainsi que des mélanges de ces sels comme des mixtes acétate/ chlorure.

Dans le cas de la présence d'un acide monovalent, la concentration de l'acide utilisé n'est pas critique et celui-ci peut donc être utilisé dilué, par exemple 1 N, ou plus concentré.

Comme base, on peut utiliser notamment les produits du type hydroxyde. On peut citer les hydroxydes d'alcalins ou d'alcalino-terreux et l'ammoniaque. On peut aussi utiliser les amines secondaires; tertiaires ou quaternaires. Toutefois, les amines et l'ammoniaque peuvent être préférés dans la mesure où ils diminuent les risques de pollution par les cations alcalins ou alcalino-terreux.

L'ajout de la base se fait jusqu'à l'obtention d'un pH dont la valeur varie en fonction de la nature de la terre rare et de la nature et du taux de complexant. Notamment, le pH est d'autant plus faible que le taux de complexant est élevé. Généralement, on ajoute la base jusqu'à l'obtention d'un pH auquel on commence à observer la dissolution du précipité qui se forme dans la première partie de l'étape de basification.

Selon le procédé de l'invention et pour la première variante on met en contact des ions phosphates avec la dispersion colloïdale de départ.

Les ions phosphates peuvent être apportés par des composés purs ou en solution, comme par exemple l'acide phosphorique, les phosphates d'alcalins ou d'autres éléments métalliques. On peut mentionner à ce sujet le mono- ou dihydrogénophosphate de sodium. Les ions phosphates sont ajoutés de préférence sous forme d'une solution d'un phosphate d'ammonium qui peut être plus particulièrement le phosphate diammonique ou monoammonique.

L'étape suivante du procédé consiste à chauffer le mélange obtenu à l'issue de l'étape précédente. La température de chauffage est d'au moins 60°C, de préférence d'au moins 100°C et elle peut aller jusqu'à la température critique du milieu réactionnel. A titre d'exemple, elle peut être comprise entre 90°C et 180°C.

Ce chauffage ou traitement thermique peut être conduit, selon les conditions de températures retenues, soit sous pression normale atmosphérique, soit sous pression telle que par exemple la pression de vapeur saturante correspondant à la température du traitement thermique. Lorsque la température de traitement est choisie supérieure à la température de reflux du mélange réactionnel (c'est à dire généralement supérieure à 100°C), on conduit alors l'opération en introduisant le mélange aqueux dans une enceinte close (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé varie entre une valeur supérieure à 1 Bar ($10^5$Pa) et 165 Bar (165. $10^5$Pa), de

préférence entre 1 Bar (5. 10⁵ Pa) et 20 Bar (100. 105 Pa). Il est bien entendu également possible d'exercer une pression extérieure qui s'ajoute alors à celle consécutive au chauffage.

Le chauffage peut être conduit soit sous atmosphère d'air, soit sous atmosphère de gaz inerte, de préférence l'azote dans ce cas.

La durée du traitement n'est pas critique, et peut ainsi varier dans de larges limites, par exemple entre 1 et 48 heures, de préférence entre 2 et 24 heures.

On obtient à l'issue de cette étape de chauffage un gel ou un précipité

Le précipité ou le gel obtenu peut être séparé du milieu réactionnel par tout moyen convenable, notamment par filtration. Le produit est ensuite remis en dispersion dans l'eau et on obtient ainsi la dispersion ou le sol de phosphate de terre rare selon l'invention. Avantageusement, le précipité issu de la réaction peut être lavé. Ce lavage peut se faire en remettant dans l'eau le précipité puis, après agitation, en séparant le solide du milieu liquide par ultracentrifugation par exemple. Cette opération peut être répétée plusieurs fois si nécessaire.

La dispersion obtenue après remise en suspension dans l'eau peut en outre être purifiée et/ou concentrée par ultrafiltration.

De manière à augmenter la stabilité de la dispersion ainsi obtenue, il est possible d'ajouter au précipité au moment de la remise en dispersion dans l'eau soit un acide soit un sel de terre rare, la terre rare étant celle de la dispersion, soit encore les deux (acide et sel), l'addition pouvant se faire successivement en deux temps dans ce dernier cas. Il peut s'agir d'un acide tel que l'acide nitrique, l'acide acétique, l'acide formique, l'acide citrique ou encore d'un acétate dans le cas d'un sel de terre rare. Cette addition se fait sous agitation et, éventuellement, à chaud. On peut effectuer un mûrissement d'une durée comprise entre 15 minutes et 1 heure.

La seconde variante du procédé va maintenant être décrite plus précisément

Cette seconde variante diffère de la première par le fait que les ions phosphates sont apportés en partie au moins sous forme d'un tripolyphosphate alcalin, par exemple un tripolyphosphate de sodium ($Na_5P_3O_{10}$). On peut ainsi utiliser tout particulièrement un mélange de tripolyphosphate alcalin et de phosphate d'ammonium. Le nombre de moles de tripolyphosphate alcalin par rapport au nombre total de moles d'agent phosphatant peut être compris par exemple entre 25 et 75%.

On procède ensuite à une étape de chauffage identique à celle décrite pour la première variante.

Toutefois, contrairement au cas de la première variante, on obtient ici directement, à l'issue de l'étape de chauffage, une dispersion colloïdale.

Cette dispersion peut être aussi traitée par ultrafiltration.

Comme précédemment, la dispersion peut être lavée en séparant les particules solides par ultracentrifugation puis en les redispersant dans l'eau et en répétant cette opération. Lors de la remise en dispersion, on peut utiliser aussi un acide ou un sel de terre rare comme décrit plus haut pour augmenter la stabilité de la dispersion.

Pour les deux variantes qui ont été décrites cidessus, il est possible, selon un mode de réalisation particulier, d'ajuster à une valeur d'au moins 10, de préférence d'au moins 12, le pH du milieu obtenu après la mise en contact des ions phosphates et de la dispersion d'oxyde de terre rare de départ. Cet ajustement peut se faire par ajout d'une base du type décrit plus haut. Il permet d'augmenter le rendement de la réaction de phosphatation.

Les dispersions de l'invention peuvent être utilisées dans de nombreuses applications. On peut citer la catalyse notamment. Les dispersions peuvent aussi être employées pour la lubrification et dans les céramiques. En outre, ces dispersions peuvent entrer dans la composition de suspensions pour polissage. Ces suspensions peuvent être utilisées au polissage du verre, par exemple dans l'industrie de la cristallerie, de la glacerie, du verre plat, des écrans de télévision, des lunettes, ou encore au polissage des matières céramiques ou autres matériaux de type vitreux. Ces suspensions peuvent aussi être utilisées tout particulièrement pour le polissage de type CMP dans l'industrie de l'électronique. Dans ce cas, elles sont particulièrement adaptées au polissage des substrats métalliques entrant dans la constitution des microprocesseurs, ces substrats pouvant être en cuivre, en aluminium, en nitrure de titane ou en tungstène.

Enfin, compte tenu de la morphologie et de la finesse des particules colloïdales qui les constituent, ces dispersions sont particulièrement adaptées à une utilisation dans la préparation de composés luminophores ou dans la fabrication de dispositifs luminescents, du type écrans avec effet de champ ou systèmes à plasma ou à vapeur de mercure par exemple. La mise en oeuvre des luminophores dans la fabrication de ces dispositifs se fait selon des techniques bien connues par exemple par sérigraphie, électrophorèse ou sédimentation.

Des exemples vont maintenant être donnés.

EXEMPLE 1

Cet exemple concerne la préparation d'une dispersion colloïdale de $LaPO_4$.

On introduit dans un bécher 28,3cm³ de solution de $La(NO_3)_3$ à 1,65 mole/kg, de densité 1,68g/cm³, (78,4mM de La) puis 15,7g d'acide citrique et on complète par de l'eau déminéralisée jusqu'à 150cm³. On ajoute ensuite 127cm³ d'ammoniaque 3N à débit constant, le temps d'addition étant de 30mn. On obtient une dispersion colloïdale d'hydroxyde de lanthane. Le pH est alors de 8,75.

Une solution de phosphate d'ammonium est préparée par addition de 9,75g de $(NH_4)_2HPO_4$ et on complète par de l'eau déminéralisée jusqu'à 150cm³.

On mélange la dispersion de lanthane et la solution de phosphate. On observe la formation d'un gel et une chute de la viscosité au cours du temps.

On réalise ensuite une mise à pH de 12,5 par addition de 120cm$^3$ de NaOH 4M. On laisse sous agitation pendant 30mn.

La dispersion est mise sous traitement thermique à 120°C pendant 16 heures.

On laisse refroidir et, pour récupérer le précipité formé, on centrifuge une aliquote de 100cm$^3$ à 4500t/mn pendant 10mn.

On reprend le culot et on complète à 10cm$^3$ par HNO$_3$ 1 M et on met sous agitation pendant une heure.

On centrifuge de nouveau à 4500t/mn pendant 10mn.

On reprend le culot et on complète par de l'eau déminéralisée à 100cm$^3$.

On centrifuge de nouveau à 4500t/mn pendant 10mn.

On reprend le culot et on complète à 100cm$^3$ par une solution d'acétate de lanthane 0,1 M .

On laisse agiter une heure.

On centrifuge et on reprend le culot que l'on complète à 100cm$^3$ par de l'eau déminéralisée.

On obtient une dispersion colloïdale.

Par cryo-microscopie à transmission, on observe des nanoparticules à morphologie isotrope de taille environ 3 à 5 nm.

Sur une aliquote de masse bien définie, le dosage en LaPO$_4$ est effectué par perte au feu : on porte à l'étuve à 80°C pendant 16 heures, puis on calcine à 900°C pendant 2 heures. La dispersion est dosée à 1,3%, ce qui correspond à une concentration de 0,055 M/l en LaPO$_4$.

La composition chimique des colloïdes est déterminée par dosage chimique après leur récupération par ultracentrifugation à 50000t/mn pendant 6 heures. Le culot est séché à température ambiante.

Le dosage chimique effectué sur le culot indique une concentration en La de 52,7% et en P de 10,8%. Ceci correspond à un rapport La/P atomique de 1,1.

Le pourcentage en poids de carbone est égal à 2,15%, définissant un rapport atomique C/La de 0,5 et un rapport molaire citrate/La de 0,08.

EXEMPLE 2.

Cet exemple concerne la préparation d'une dispersion colloïdale de LaPO$_4$.

15,7g d'acide citrique C$_6$H$_8$O$_7$, H$_2$O Profabo®, de masse moléculaire Mw = 210,14g, soit 0,074 moles d'acide citrique, sont mis à dissoudre dans 102m d'eau.

On incorpore ensuite 45,11g (ou 26,8cm$^3$) de solution de La(NO$_3$)$_3$ à 26,98% en La$_2$O$_3$ soit 12,18g de La$_2$O$_3$ ou 0,074 mole de La.

Le rapport molaire citrate/La est égal à 1.

On additionne à température ambiante et sous agitation 98,5ml de solution NH$_4$OH à 3,23M/l à un débit de 2ml/mn. La quantité d'ions OH versée correspond à un rapport molaire OH/La égal à 4,30.

On laisse sous agitation à température ambiante pendant 2h. Le pH de la dispersion obtenue est de 8,5.

On prépare alors un mélange phosphatant contenant du tripolyphosphate de sodium et du phosphate diammonique à un rapport molaire NaTPP:(NH$_4$)$_2$HPO4 de 50:50.

Ce mélange est préparé par addition de 3,78g de tripolyphosphate de sodium NaTPP à 7,82 M/Kg en P et de 3,908g de (NH$_4$)$_2$HPO$_4$ dans un bécher et on complète par de l'eau déminéralisée jusqu'à 150ml. On réalise à température ambiante l'addition instantanée de la solution de phosphate dans la dispersion de lanthane préparée plus haut. Le rapport molaire P/La est égal à 0,8. Le pH est égal à 8,7 après 15m d'agitation

On réalise ensuite une mise à pH de 12,5 par utilisation d'une solution de NaOH (104g) à 4M/l. La dispersion obtenue est immédiatement transférée dans des enceintes fermées (bombes de Parr) et portée à 120°C pendant une nuit dans une étuve préalablement mise en température pendant 16 heures.

On obtient alors une dispersion colloïdale transparente à l'oeil.

Un lavage de la dispersion colloïdale est réalisé par ultrafiltration sur des membranes de 3 KD. A 100cm$^3$ de la dispersion issue du traitement en température et refroidie, on additionne 200cm$^3$ d'eau déminéralisée. On ultrafiltre jusqu'à un volume de 100cm$^3$ et on additionne de nouveau 200cm$^3$ d'eau déminéralisée. On ultrafiltre de nouveau jusqu'à un volume final de 100cm$^3$. On a ainsi effectué un lavage de la dispersion par 4 fois son volume d'eau.

Par cryo-microscopie à transmission, on observe des nanoparticules à morphologie isotrope de taille environ 5 nm bien désagglomérées, le taux d'agglomération, tel que défini plus haut étant inférieur à 5% et le rapport L/1 des particules, tel que défini précédemment étant inférieur à 3.

La composition chimique des colloïdes est obtenue par dosage chimique des colloïdes récupérés par ultracentrifugation à 50000 t/mn durant 6 heures. Le dosage chimique du culot après séchage à 20°C donne ainsi les teneurs suivantes:

La = 47,4%, P = 8,2%, C = 3,89%
définissant les rapports molaires suivants : La/P = 1,29, C/La de 0,95 et citrate/La= 0,16

EXEMPLE 3

Cet exemple concerne la préparation d'une dispersion colloïdale de LaCeTbPO$_4$.

On introduit dans un bécher 104g de La(NO$_3$)$_3$ à 1,65mole/kg, (172mM de La), puis 8,33ml de solution de Ce(NO$_3$)$_3$ à 3mole/l (25mM de Ce), puis 27,3ml de solution Tb(NO$_3$)$_3$ à 1,9mole/l (52mM de Tb). La composition correspondante de l'oxyde visée est alors

$(La_{0,69}Ce_{0,1}Tb_{0,21})O_3$.

On ajoute ensuite 52,5g d'acide citrique $C_6H_8O_7$, $H_2O$ Prolabo®, de masse moléculaire Mw= 210,14g (250mM) et on complète par de l'eau déminéralisée jusqu'à 500cm³.

Sur une aliquote de 200cm³ du mélange ainsi préparé (100mM La+Ce+Tb), on additionne ensuite 135cm³ d'ammoniaque 2,8N à débit constant, le temps d'addition étant de 30mn. Le pH est alors de 9,2 et on obtient une dispersion colloïdale.

Une solution de phosphate d'ammonium est obtenue par addition de 13,2g de $(NH_4)_2HPO_4$ (100mM) et on complète par de l'eau déminéralisée jusqu'à 200cm³.

On mélange cette solution avec la dispersion à base de lanthane, de cérium et de terbium.

On réalise ensuite une mise à pH de 12,5 par addition de NaOH 4M. On laisse sous agitation pendant 30mn.

La dispersion est mise sous traitement thermique à 120°C pendant 16 heures.

On laisse refroidir et on centrifuge une aliquote de 100cm³ à 4500t/mn pendant 10mn.

On reprend le culot et on complète à 100cm³ par $HNO_3$ 1 M et on met sous agitation pendant une heure.

On centrifuge de nouveau à 4500t/mn pendant 10mn.

On reprend le culot et on complète par de l'eau déminéralisée à 100cm³. On centrifuge de nouveau à 4500t/mn pendant 10mn.

On reprend le culot et on complète à 100cm³ par une solution d'acétate de lanthane 0,1M.

On laisse agiter une heure.

On centrifuge et on reprend le culot que l'on complète à 100cm³ par de l'eau déminéralisée.

On obtient une dispersion colloïdale.

Par cryo-microscopie à transmission, on observe des nanoparticules à morphologie isotrope de taille d'environ 3 à 5 nm.

La dispersion colloïdale est luminescente avec émission d'une coloration verte sous excitation UV.

**Revendications**

1. Dispersion colloïdale aqueuse de particules de phosphate d'au moins une terre rare qui comprend soit un complexant présentant un pK (cologarithme de la constante de dissociation du complexe formé par le complexant et ladite terre rare) supérieur à 2,5; soit un anion d'un acide monovalent, soluble dans l'eau et présentant un pKa compris entre 2,5 et 5; soit encore ledit complexant ou ledit anion en mélange, **caractérisée en ce que** lesdites particules sont isotropes et présentent un rapport L/I d'au plus 4, L désignant la plus, grande longueur de la particule et 1 désignant la plus petite et **en ce qu'**elles présentent un taux d'agglomération de colloïdes inférieur à 40%, plus particulièrement inférieur à 10%.

2. Dispersion selon la revendication 1, **caractérisée en ce que** les particules présentent une taille moyenne d'au plus 20nm.

3. Dispersion selon l'une des revendications 1 ou 2, **caractérisée en ce que** le phosphate de terre rare est un phosphate de lanthane, de cérium et de terbium.

4. Dispersion selon l'une des revendications 1 ou 2, **caractérisée en ce que** le phosphate de terre rare est un phosphate de lanthane et d'europium.

5. Dispersion selon l'une des revendications précédentes, **caractérisée en ce que** le complexant est choisi parmi les acides- ou polyacides-alcools, les acides aliphatiques aminés, les acides polyacryliques ou les sels de ceux-ci.

6. Dispersion selon l'une des revendications précédentes, **caractérisée en ce que** l'acide monovalent précité est l'acide acétique.

7. Dispersion selon l'une des revendications précédentes, **caractérisée en ce que** les particules présentent un rapport L/I d'au plus 3.

8. Procédé de préparation d'une dispersion colloïdale selon l'une des revendications précédentes, **caractérisé en ce qu'**il comprend les étapes suivantes :

   - on met en contact une dispersion colloïdale d'au moins un composé de terre rare, comprenant au moins un complexant ou un anion de l'acide monovalent précité; avec des ions phosphates apportés par des composés choisis parmi l'acide phosphorique, les phosphates d'alcalins ou d'autres éléments métalliques ou un phosphate d'ammonium;
   - on chauffe le milieu ainsi obtenu ce par quoi on obtient un précipité;
   - on sépare le précipité ainsi obtenu et on le redisperse dans l'eau, ce par quoi on obtient une dispersion colloïdale.

9. Procédé de préparation d'une dispersion colloïdale selon l'une des revendications 1 à 7, **caractérisé en ce qu'**il comprend les étapes suivantes :

   - on met en contact une dispersion colloïdale d'au moins un composé de terre rare comprenant au moins un complexant ou un anion de l'acide monovalent précité, avec des ions phosphates dont au moins une partie est sous forme de tripolyphosphate alcalin;
- on chauffe le milieu ainsi obtenu ce par quoi on obtient une dispersion colloïdale.

**10.** Procédé selon la revendication 8 ou 9, **caractérisé en ce qu'**on prépare la dispersion colloïdale précitée d'au moins un composé de terre rare en formant un mélange aqueux comprenant au moins un sel de terre rare et soit un complexant précité soit un acide monovalent, soluble dans l'eau et présentant un pKa compris entre 2,5 et 5, soit un mélange du complexant et de l'acide monovalent; et en ajoutant au mélange formé une base.

**11.** Procédé selon l'une des revendications 8 à 10, **caractérisé en ce qu'**on chauffe le milieu obtenu après la mise en contact de la dispersion colloïdale précitée d'au moins un composé de terre rare avec les ions phosphates ou les ions phosphates et le tripolyphosphate à une température d'au moins 60°C.

**12.** Procédé selon l'une des revendications 8 à 11, **caractérisé en ce que** les ions phosphates sont apportés sous forme d'une solution de phosphate d'ammonium, plus particulièrement le phosphate monoammonique ou diammonique.

**13.** Procédé selon l'une des revendications 8 à 12, **caractérisé en ce que** on ajuste à une valeur d'au moins 10 le pH du milieu obtenu après la mise en contact de la dispersion colloïdale précitée d'au moins un composé de terre rare avec les ions phosphates.

**Claims**

**1.** Aqueous colloidal dispersion of particles of phosphates of at least one rare earth, which dispersion includes either a complexing agent having a pK (cologarithm of the dissociation constant of the complex formed by the complexing agent and said rare earth) of greater than 2.5, or an anion of a water-soluble monovalent acid having a pKa of between 2.5 and 5, or else said complexing agent or said anion as a mixture, **characterized in that** said particles are isotropic and have an L/1 ratio of at most 4, L denoting the largest dimension and 1 denoting the smallest dimension of the particle, and **in that** they have a degree of colloid agglomeration of less than 40%, more particularly less than 10%.

**2.** Dispersion according to Claim 1, **characterized in that** the particles have a mean size of at most 20 nm.

**3.** Dispersion according to either of Claims 1 and 2, **characterized in that** the rare-earth phosphate is a lanthanum cerium terbium phosphate.

**4.** Dispersion according to either of Claims 1 and 2, **characterized in that** the rare-earth phosphate is a lanthanum europium phosphate.

**5.** Dispersion according to one of the preceding claims, **characterized in that** the complexing agent is chosen from acid-alcohols or polyacid-alcohols, aliphatic amino acids, polyacrylic acids, or salts of said acids.

**6.** Dispersion according to one of the preceding claims, **characterized in that** the aforementioned monovalent acid is acetic acid.

**7.** Dispersion according to one of the preceding claims, **characterized in that** the particles have an L/1 ratio of at most 3.

**8.** Method of preparing a colloidal dispersion according to one of the preceding claims, **characterized in that** it comprises the following steps:

- a colloidal dispersion of at least one rare-earth compound, which includes at least one complexing agent or an anion of the aforementioned monovalent acid, is brought into contact with phosphate ions provided by compounds chosen from phosphoric acid, phosphates of alkali metals or of other metallic elements, or an ammonium phosphate;
- the mixture thus obtained is heated, thereby obtaining a precipitate; and
- the precipitate thus obtained is separated and redispersed in water, thereby obtaining a colloidal dispersion.

**9.** Method of preparing a colloidal dispersion according to one of Claims 1 to 7, **characterized in that** it comprises the following steps:

- a colloidal dispersion of at least one rare-earth compound, which includes at least one complexing agent or an anion of the aforementioned monovalent acid, is brought into contact with phosphate ions, at least some of which are in the form of alkali metal tripolyphosphates; and
- the mixture thus obtained is heated, thereby obtaining a colloidal dispersion.

**10.** Method according to Claim 8 or 9, **characterized in that** the aforementioned colloidal dispersion of at least one rare-earth compound is prepared by forming an aqueous mixture that includes at least one rare-earth salt and either a complexing agent, as mentioned above, or a water-soluble monovalent acid having a pKa of between 2.5 and 5, or a mixture of the complexing agent and the monovalent acid, and by adding a base to the mixture formed.

**11.** Method according to one of Claims 8 to 10, **characterized in that** the mixture obtained after bringing the aforementioned colloidal dispersion of at least one rare-earth compound, into contact with the phosphate ions or with the phosphate ions and the tripolyphosphate, is heated to a temperature of at least 60°C.

**12.** Method according to one of Claims 8 to 11, **characterized in that** the phosphate ions are provided in the form of an ammonium phosphate, more particularly monoammonium or diammonium phosphate, solution.

**13.** Method according to one of Claims 8 to 12, **characterized in that** the pH of the mixture obtained after bringing the aforementioned colloidal dispersion of at least one rare-earth compound into contact with the phosphate ions is adjusted to a value of at least 10.

**Patentansprüche**

**1.** Kolloidale wäßrige Dispersion von Teilchen aus Phosphat mindestens eines Seltenerdmetalls, die entweder einen Komplexbilder mit einem pK-Wert (negativer Logarithmus der Dissoziationskonstante des Komplexes aus dem Komplexbilder und dem Seltenerdmetall) von mehr als 2,5 oder ein Anion einer einwertigen Säure, die wasserlöslich ist und einen pKa-Wert zwischen 2,5 und 5 aufweist, oder auch den Komplexbilder oder das Anion im Gemisch enthält, **dadurch** gekenntzeichnet, daß die Teilchen isotrop sind und ein L/1-Verhältnis von höchstens 4, wobei L für die größte Länge des Teilchens steht und 1 für die kleinste Länge steht, und einen Kolloidagglomerationsgrad von weniger als 40% und insbesondere weniger als 10% aufweisen.

**2.** Dispersion nach Anspruch 1, **dadurch gekennzeichnet, daß** die Teilchen eine mittlere Größe von höchstens 20 nm aufweisen.

**3.** Dispersion nach Anspruch 1 oder 2, **dadurch gekennzeichnet, daß** es sich bei dem Seltenerdmetallphosphat um ein Phosphat von Lanthan, Cer und Terbium handelt.

**4.** Dispersion nach Anspruch 1 oder 2, **dadurch gekennzeichnet, daß** es sich bei dem Seltenerdmetallphosphat um ein Phosphat von Lanthan und Europium handelt.

**5.** Dispersion nach einem der vorhergehenden Ansprüche, **dadurch gekennzeichnet, daß** der Komplexbilder unter Säurealkoholen oder Polysäurealkoholen, aliphatischen Aminosäuren, Polyacrylsäuren oder Salzen davon ausgewählt ist.

**6.** Ansprüche, **dadurch gekennzeichnet, daß** es sich der der obigen einwertigen Säure um Essigsäure handelt.

**7.** Dispersion nach einem der vorhergehenden Ansprüche, **dadurch gekennzeichnet, daß** die Teilchen ein L/1-Verhältnis von höchstens 3 aufweisen.

**8.** Verfahren zur Herstellung einer kolloidalen Dispersion nach einem der vorhergehenden Ansprüche, **dadurch gekennzeichnet, daß** man:

- eine kolloidale Dispersion mindestens einer Seltenerdmetallverbindung, die mindestens einen Komplexbilder oder ein Anion der obigen einwertigen Säure enthält, mit Phosphationen, die durch Verbindungen bereitgestellt werden, die unter Phosphorsäure, Phosphaten von Alkalimetallen oder anderen Metallelementen oder einem Ammoniumphosphat ausgewählt werden, in Berührung bringt;
- das so erhaltene Medium erhitzt, wodurch man einen Niederschlag erhält;
- den so erhaltenen Niederschlag abtrennt und in Wasser redispergiert, wodurch man eine kolloidale Dispersion erhält.

**9.** Verfahren zur Herstellung einer kolloidalen Dispersion nach einem der Ansprüche 1 bis 7, **dadurch gekennzeichnet, daß** man:

- eine kolloidale Dispersion mindestens einer Seltenerdmetallverbindung, die mindestens einen Komplexbilder oder ein Anion der obigen einwertigen Säure enthält, mit Phosphationen, die mindestens zum Teil in Form von Alkalimetalltripolyphosphat vorliegen, in Berührung bringt;
- das so erhaltene Medium erhitzt, wodurch man eine kolloidale Dispersion erhält.

**10.** Verfahren nach Anspruch 8 oder 9, **dadurch gekennzeichnet, daß** man die obige kolloidale Dispersion mindestens einer Seltenerdmetallverbindung herstellt, indem man eine wäßrige Mischung bildet, die mindestens ein Seltenerdmetallsalz und entweder einen obigen Komplexbilder oder eine einwertige Säure, die wasserlöslich ist und einen pKa-Wert zwischen 2,5 und 5 aufweist, oder eine Mischung des Komplexbildners und der einwertigen Säure enthält, und der gebildeten Mischung eine Base zugibt.

**11.** Verfahren nach einem der Ansprüche 8 bis 10, **dadurch gekennzeichnet, daß** man das nach dem Inberührungbringen der obigen kolloidalen Dispersion mindestens einer Seltenerdmetallverbindung mit den Phosphationen oder den Phosphationen und dem Tripolyphosphat erhaltene Medium auf eine Temperatur von mindestens fi0°C erhitzt.

12. Verfahren nach einem der Ansprüche 8 bis 11, **dadurch gekennzeichnet, daß** man die Phosphationen in Form einer Lösung von Ammoniumphosphat, insbesondere Ammoniumdihydrogenphosphat oder Diammoniumhydrogenphosphat, bereitstellt.

13. Verfahren nach einem der Ansprüche 8 bis 12, **dadurch gekennzeichnet, daß** man den pH-Wert des nach dem Inberührungbringen der obigen kolloidalen Dispersion mindestens einer Seltenerdmetallverbindung mit Phosphationen erhaltenen Mediums auf einen Wert von mindestens 10 einstellt.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0076918 A
- EP 308311 A
- EP 206906 A
- EP 208581 A
- EP 316205 A
- EP 239477 A
- EP 208580 A